**Europäisches Patentamt**

**European Patent Office**

**Office européen des brevets**

(11) Numéro de publication : **0 511 060 A1**

# (12) DEMANDE DE BREVET EUROPEEN

(21) Numéro de dépôt : **92401083.8**

(22) Date de dépôt : **17.04.92**

(51) Int. Cl.$^5$ : **G06K 9/66,** G06F 15/18

(30) Priorité : **26.04.91 FR 9105179**

(43) Date de publication de la demande :
**28.10.92 Bulletin 92/44**

(84) Etats contractants désignés :
**DE GB IT NL**

(71) Demandeur : **THOMSON-CSF**
**51, Esplanade du Général de Gaulle**
**F-92800 Puteaux (FR)**

(72) Inventeur : **Quignon, Jean**
**THOMSON-CSF, SCPI, Cédex 67**
**F-92045 Paris la Défense (FR)**
Inventeur : **Regef, Jean-Luc**
**THOMSON-CSF, SCPI, Cédex 67**
**F-92045 Paris la Défense (FR)**

(74) Mandataire : **Benoit, Monique et al**
**THOMSON-CSF SCPI**
**F-92045 PARIS LA DEFENSE CEDEX 67 (FR)**

(54) **Procédé et dispositif de classification automatique d'objets.**

(57)    Procédé et dispositif de classification automatique d'objets comprenant une phase d'apprentissage et une phase d'exécution, combinant en phase d'apprentissage un procédé d'auto-organisation avec le procédé de rétro-propagation du gradient, et réalisant la phase d'exécution suivant la structure du perceptron.

Application : reconnaissance de formes pour la robotique ou le contrôle industriel.

FIG.1

**EP 0 511 060 A1**

La présente invention concerne un procédé et un dispositif de classification automatique d'objets. Elle s'applique en général à tous les domaines nécessitant une classification automatique, tels que la robotique ou le contrôle industriel par exemple.

La classification automatique d'objets comprend en général deux phases : une phase d'apprentissage et une phase d'exécution. Les classes d'objets étant définies, à partir au moins d'un ensemble appelé base d'apprentissage et comprenant une partie des configurations possibles des objets pouvant être rencontrés, la phase d'apprentissage permet, au moyen de différents procédés connus, l'élaboration d'un algorithme plus ou moins complexe et destiné à la phase d'exécution. Plus la base d'apprentissage contiendra de configurations possibles d'objets à classer, meilleures seront les performances. La façon dont est réalisée la phase d'apprentissage est importante car suivant les algorithmes élaborés durant cette phase, la phase d'exécution sera plus ou moins rapide et plus ou moins performante.

Les objets à classer sont représentés par des vecteurs dont les paramètres correspondent à certaines de leurs caractéristiques principales. Selon la nature et la diversité des objets, ainsi que la rapidité désirée pour la phase d'exécution, différents procédés peuvent être utilisés. Dans le cas d'objets pouvant être représentés par un nombre de paramètres limités, les différents procédés dits d'auto-organisation et connus en soi, peuvent être utilisés dans la phase d'apprentissage et donner des résultats performants comme le montre l'article de L. Cooper "Learning system architecture composed of multiple learning modules" (IEEE First International Conference on Neural Networks - 21-24 June, 1987 - San Diego). Mais lorsque la classification présente une complexité accrue, c'est-à-dire lorsque le nombre de paramètres correspondant aux objets à classer augmente, ce procédé devient trop coûteux en calcul et la rapidité en phase d'exécution diminue jusqu'à devenir prohibitive pour certaines applications en temps réel.

En fait, dans le cas où certaines vitesses sont exigées en phase d'exécution, la structure dite du perceptron est la mieux adaptée durant cette phase. En effet, elle se traduit par des calculs matriciels, certes de dimensions très élevées, mais néanmoins plus rapides que l'exécution des algorithmes issus d'autres procédés. La structure du perceptron est une structure à couches selon laquelle les variables dites neurones d'une couche amont sont reliées aux neurones de la couche suivante par des coefficients dits synapses. Les neurones de la couche suivante sont le résultat de la multiplication du vecteur composé des neurones de la couche amont par la matrice synaptique, composées par les synapses, suivie d'une fonction de seuil destinée à supprimer des valeurs extrêmes, saturantes et non significatives. Par ailleurs, cette structure permet une réalisation parallèle efficace qui augmente la rapidité d'exécution. Le procédé d'apprentissage le plus répandu de ces réseaux de neurones est le procédé dit de rétro-propagation du gradient connu en soi. Selon ce procédé, en phase d'apprentissage, les coefficients synaptiques s'ajustent en vue de minimiser une fonction d'énergie globale. Cependant lorsque la diversité des objets devient trop importante, c'est-à-dire quand les caractéristiques des objets deviennent trop mélangées ou imbriquées les unes aux autres, cette fonction d'énergie a de trop nombreux minimum locaux, et le procédé de rétro-propagation du gradient n'est plus performant. Ainsi les procédés connus ne permettent pas à la fois la classification d'objets dont la diversité et la complexité sont importantes et une grande rapidité en phase d'exécution avec de bonnes performances.

Le but de l'invention est de pallier les inconvénients précités.

A cet effet, l'invention a pour objet un procédé de classification automatique comprenant une phase d'apprentissage et une phase d'exécution, caractérisé en ce qu'il réalise la phase d'apprentissage à partir d'une base d'apprentissage par un procédé d'auto-organisation associé au procédé de rétro-propagation du gradient et applique la phase d'exécution à l'objet à classer selon la structure du perceptron.

L'invention a également pour objet un dispositif pour la mise en oeuvre du procédé précité.

L'invention a pour principaux avantages qu'elle permet une mise en oeuvre en temps réel de la phase d'exécution avec un taux d'erreur très faible. Par ailleurs la phase d'apprentissage peut être programmée facilement, L'invention permet de plus l'utilisation de plusieurs processeurs câblés en parallèle pour réduire les temps de calcul de la phase d'exécution.

D'autres caractéristiques et avantages de l'invention apparaîtront à l'aide de la description qui suit faite en regard des dessins annexés qui représentent :

- la figure 1, un organigramme pour illustrer les étapes du procédé mis en oeuvre par l'invention ;
- la figure 2a, un objet théorique comprenant deux paramètres ;
- la figure 2b, un exemple possible d'auto-organisation dans un espace à deux dimensions ;
- la figure 3a, un sous-ensemble possible de la base d'apprentissage ;
- la figure 3b, une séparation possible obtenue par le procédé de rétro-propagation ;
- la figure 4a, un perceptron élémentaire ;
- la figure 4b, une première couche synaptique possible d'un réseau de neurones ;
- la figure 5, une fonction seuil de type sigmoïde ;
- la figure 6a, une seconde couche synaptique possible d'un réseau de neurones ;
- la figure 6b, une troisième couche synaptique possible d'un réseau de neurone ;
- la figure 6c, une représentation totale des réseaux précédents selon les figures 4a, 6a et 6b ;

- la figure 7, un schéma synoptique possible d'un dispositif pour la mise en oeuvre du procédé selon l'invention ;

- la figure 8, une décomposition possible du vecteur d'entrée ;

- la figure 9, une configuration parallèle possible du dispositif de mise en oeuvre du procédé selon l'invention.

- la figure 10, une organisation possible en groupes et en sous-groupes ;

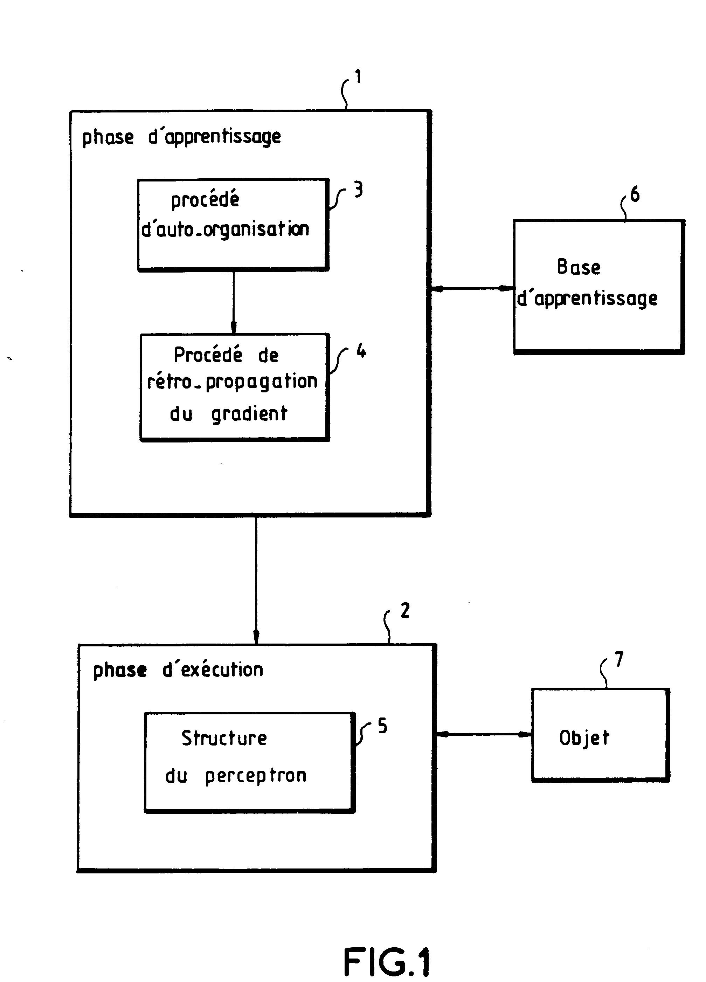

L'organigramme de la figure 1 présente les différentes étapes de la classification selon l'invention. La phase d'apprentissage 1 réalisée à partir de la base d'apprentissage 6 utilise d'abord un procédé d'auto-organisation 3 parmi les plus adaptés à la résolution du problème, puis le procédé de rétro-propagation du gradient 4. La phase d'exécution 2 est ensuite appliquée à l'objet à classer 7 suivant la structure du perceptron 5. Par l'utilisation de méthodes d'auto-organisation, il est possible de diviser le problème complexe initial posé par une grande diversité d'objets en plusieurs problèmes simples, redondants, pour lesquels la diversité des objets est faible, la redondance permettant l'amélioration des performances. Puis chacun de ces problèmes simples peut être résolu par le procédé de rétro-propagation du gradient. La juxtaposition et la mise en cascade de ces problèmes simples peut alors permettre de résoudre le problème complexe initial avec de bonnes performances en faisant appel dans la phase d'exécution à la structure du perceptron, donc avec une vitesse d'exécution élevée. Comme va le montrer l'exemple de classification suivant réalisé selon l'invention, le procédé d'auto-organisation ne modifie pas la structure du perceptron c'est-à-dire que durant la phase d'exécution le procédé d'auto-organisation est totalement transparent.

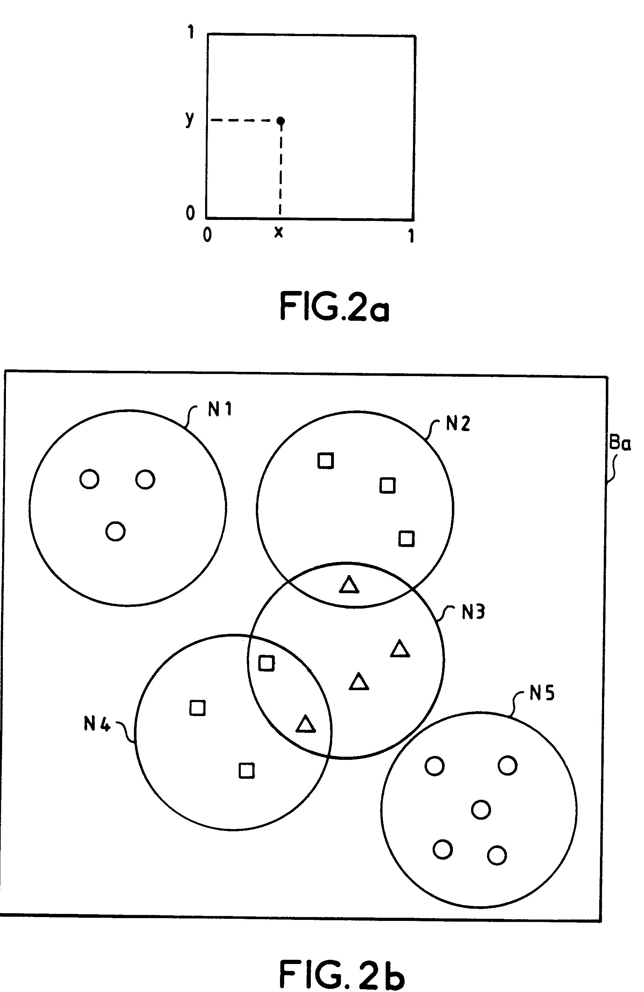

La figure 2a représente un objet théorique ne comprenant que deux paramètres, par un point dans un plan. Dans la réalité, les objets peuvent par exemple être des images appelées imagettes représentées par des vecteurs comportant au moins 1024 paramètres correspondant aux pixels de ces imagettes. Dans ce cas une imagette pourrait se représenter dans un hyper-plan de dimension 1024 par analogie à la figure 2a. Le vecteur composé des paramètres de l'objet correspond au vecteur d'entrée de la phase d'exécution. Le but de la classification est ici, par exemple, la reconnaissance de formes.

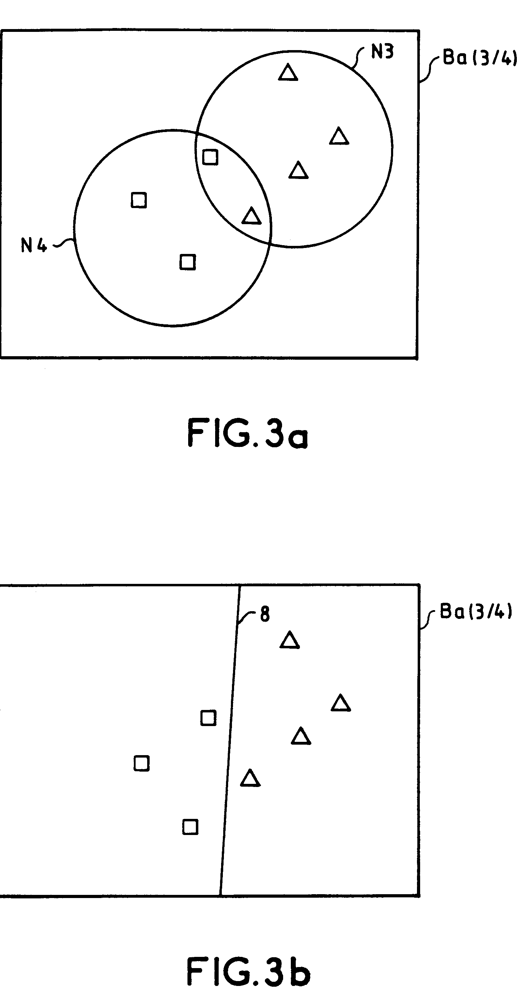

La figure 2b schématise le résultat d'une auto-organisation dans un espace à deux dimensions, c'est-à-dire où les objets sont représentés par des vecteurs à deux paramètres, sur une base d'apprentissage Ba comportant 18 objets. Les objets symbolisés par un carré appartiennent à une première classe, ceux symbolisés par un triangle à une seconde classe, enfin ceux symbolisés par un cercle à une troisième classe. Le problème de classification est ici complexe car les classes sont fortement imbriquées ou mélangées. Le procédé d'auto-organisation regroupe les objets en sous-ensembles appelés nuages, repérés par N1, N2, N3, N4 et N5. Les différentes méthodes utilisées en général cherchent à obtenir des nuages parfaitement mono-classes comme N1 et N5 par exemple. Il est en effet possible d'y parvenir, au prix cependant d'une phase d'exécution très longue à cause des temps de calcul. Selon l'invention, il convient donc de trouver un compromis entre le nombre de classes, qui détermine les temps de calcul, et la qualité des classes, qui détermine les performances de la classification. A cet effet, le procédé selon l'invention utilise une méthode d'auto-organisation orientée de façon à réaliser des nuages les plus mono-classes possibles tout en conservant des durées de calcul compatibles avec la phase d'exécution. Néanmoins, la résolution obtenue par cette première classification, trop grossière, ne garantit pas les performances attendues. Afin d'obtenir ces performances, le procédé selon

l'invention associe donc à cette méthode d'auto-organisation, le procédé de rétro-propagation du gradient, dont le but est d'affiner les frontières entre les classes comme le montrent les figures 3a et 3b.

La figure 3a montre une partie Ba(3/4) de la base d'apprentissage Ba ne comportant que les objets correspondant aux nuages, N3 et N4. Le problème de classification P(3/4) posé ici est simple car la diversité des objets est plus faible, en effet les classes en présence ne s'imbriquent pas, il est possible de définir une frontière entre les carrés et les triangles.

La figure 3b schématise la résolution du problème simple de la figure 3a par un algorithme de rétro-propagation du gradient à une couche. L'algorithme sépare l'espace en deux zones et par là-même les objets des nuages N3 et N4 en deux classes distinctes par la définition d'une frontière encore appelée séparateur 8 entre les carrés et les triangles. Il est possible de créer ainsi, de manière en général redondante, un certain nombre de problèmes de classification simples à partir du problème initial complexe. Par exemple le problème de classification P(1/2) entre les nuages N1 et N2, le problème P(1/3) entre les nuages N1 et N3, le problème P(1/2 et 4) entre le nuage N1 d'une part et les nuages N2 et N4 d'autre part et ainsi de suite.

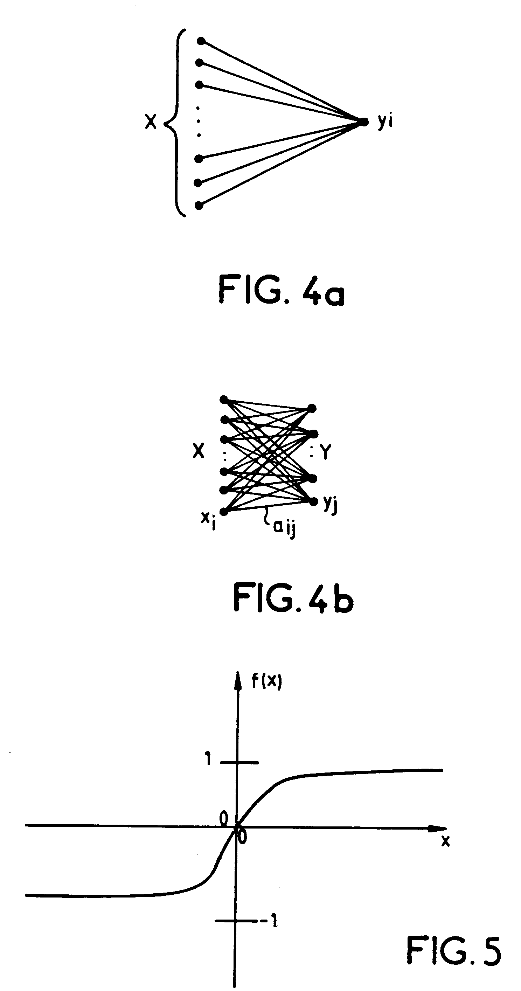

La figure 4a représente la structure d'un perceptron mono-couche à une sortie appliquée à la résolution d'un problème simple de classification $P_i$ où X représente le vecteur d'entrée composé de paramètres encore appelés neurones et $y_i$ le résultat de la classification, yi peut prendre par exemple les valeurs positives ou négatives comprises entre -1 et 1, -1 étant une certitude de non appartenance à une classe, 1 étant la certitude d'appartenir à cette classe. Les classes obtenues par cette première résolution ne sont pas les classes finales recherchées, mais correspondent à des nuages mono-classes. L'apprentissage de ce réseau de neurones se fait par rétro-propagation du gradient à partir du sous -ensemble correspondant de la base d'apprentissage, Ba(3/4) par exemple, selon la figure 3a. Dans ce dernier cas $y_i$ serait par exemple égal à +1 pour les triangles des nuages N3 et N4 et égal à -1 pour les carrés des nuages N3 et N4.

La figure 4b montre comment il est possible de juxtaposer les perceptrons élémentaires pour obtenir le perceptron appliqué à la première couche de classification du réseau de neurones en phase d'exécution : chaque paramètre $x_i$ du vecteur X d'entrée est relié à chaque neurone $y_j$ de la première couche par un coefficient $a_{ij}$. Le vecteur Y de neurones $y_j$ de la première couche ainsi obtenue est le résultat de la multiplication de la matrice synaptique A de coefficients $a_{ij}$ définis précédemment, par le vecteur d'entrée X de paramètre $x_i$. En mode d'exécution, le vecteur Y est obtenu à partir du vecteur d'entrée X par la relation :

$$Y = f(AX) \quad (1)$$

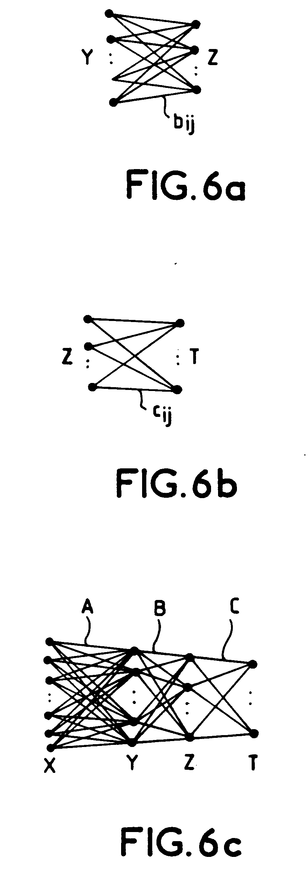

où AX représente la multiplication de la matrice synaptique A par le vecteur d'entrée X et f une fonction de seuil de type sigmoïde par exemple représentée sur la figure 5. Les valeurs des paramètres du produit AX peuvent prendre des valeurs extérieures à l'intervalle compris entre -1 et 1, cette fonction de seuil sert à ramener ces valeurs entre -1 et 1 par exemple. Cette fonction de seuil n'est néanmoins pas obligatoire. Puis suivant la figure 6a un autre perceptron monocouche est appliqué en cascade avec le précédent, dont le vecteur d'entrée est le vecteur Y calculé précédemment et le vecteur de sortie est le vecteur Z dont les paramètres définissent l'appartenance aux nuages mono-classes définis selon la figure 3b. Pour chaque objet, les paramètres de la réponse, c'est-à-dire du vecteur Z, correspondant au nuage auquel l'objet appartient, sont égaux à +1, tous les autres à -1 par exemple. L'apprentissage de ce perceptron se fait par rétro-propagation du gradient, de façon à calculer les coefficients $b_{ij}$ de la matrice synaptique B telle que :

$$Z = f (BY) \quad (2)$$

où BY représente la multiplication de la matrice B par le vecteur Y et f la fonction de seuil définie précédemment selon la figure 5.

Enfin comme le montre la figure 6b, un dernier perceptron monocouche est appliqué en cascade avec le précédent, dont le vecteur d'entrée est Z et le vecteur de sortie le vecteur T. Les paramètres du vecteur T représentent les classes, obtention qui constitue le but de la classification automatique selon la présente invention. Pour chaque objet de la base Ba initiale, le paramètre du vecteur T, correspondant à sa classe est égal à 1, tous les autres à -1.

L'apprentissage de ce perceptron se fait également par rétro-propagation du gradient, de façon à calculer les coefficients $C_{ij}$ de la matrice synaptique C, telle que T = f(CZ).

La figure 6c montre la structure globale du réseau en mode d'exécution. X représente le vecteur d'entrée et Y le vecteur de la première couche obtenu par la multiplication de la matrice A et du vecteur X. De même Z est le vecteur de la seconde couche résultant de la multiplication de la matrice B et du vecteur Y et T est le vecteur de la troisième couche obtenu par la multiplication de la matrice C et du vecteur Z. Les matrices A, B, C sont l'expression mathématique des traits de liaison joignant les vecteurs X, Y, Z et T. Le vecteur de sortie T dont les paramètres définissent l'appartenance aux classes est donc déduit du vecteur d'entrée X associé à un objet et dont les paramètres représentent ses principales caractéristiques par la relation:

$$T = f [C.f [B.f(AX)]] \quad (3)$$

Dans le cas de l'exemple présenté en figure 2a, X est un vecteur composé de deux paramètres. Dans le cas d'objets tels que des imagettes caractérisées par exemple par 1024 paramètres, la matrice A peut atteindre plusieurs dizaines, voire plusieurs centaines de milliers de coefficients.

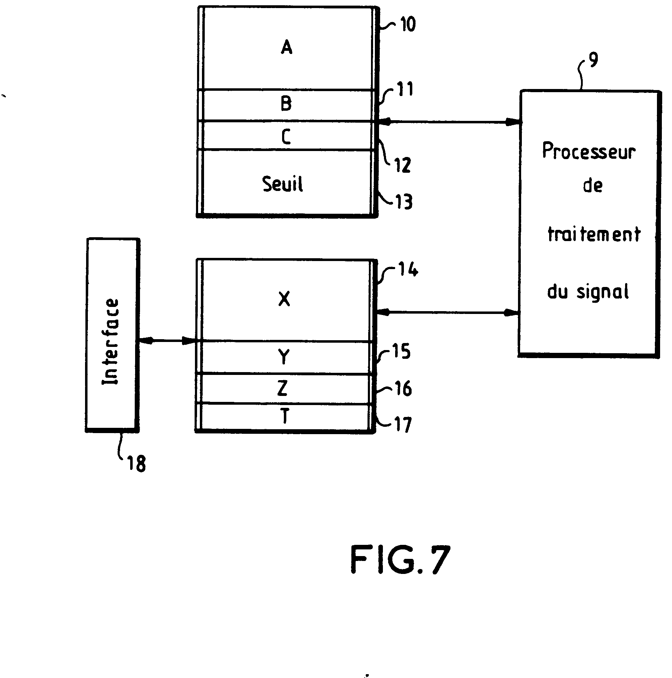

La figure 7 représente le schéma synoptique d'un exemple de réalisation possible d'un dispositif pour la mise en oeuvre du procédé selon l'invention.

Les coefficients des matrices synaptiques A, B, C sont stockés respectivement dans les mémoires A 10, mémoire B 11 et mémoire C 12. Le vecteur d'entrée X, qui est une représentation de l'objet à classer, est enregistré dans la mémoire X correspondante 14, par l'intermédiaire d'une interface 18 couplée avec le bus qui relie le système de classification au système d'acquisition. Le calcul de la fonction de seuil s'effectue par exemple par une table de conversion stockée en mémoire I3. Le processeur de traitement du signal 9 effectue la multiplication matricielle de A par X. Pour chaque résultat obtenu, il calcule par exemple l'adresse correspondante de la table de conversion stockée en mémoire I3, lit directement le résultat de la fonction de seuil et le stocke dans la mémoire Y 15. Après avoir ainsi effectué l'opération Y = f(AX) définie par la relation (1), le processeur effectue de la même manière l'opération Z = f(BY) définie par la relation (2) et stocke le résultat dans la mémoire Z 16. Finalement, il effectue l'opération globale T = f[Cf[Bf(AX]] définie par la relation (3) dont le résultat occupe la mémoire T 17. Ainsi les paramètres stockés dans la mémoire T 17 définissent la vraisemblance de chaque classe possible de l'objet, cette valeur est comprise entre -1 et 1. Le processeur envoie par l'intermédiaire de l'interface bus le numéro de classe correspondant au paramètre du vecteur T dont la valeur est la plus grande.

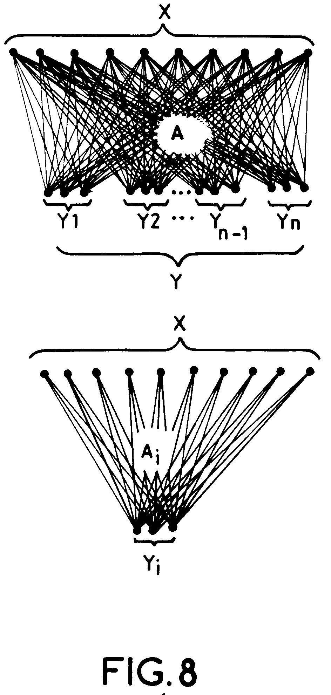

La figure 8 montre une décomposition possible du vecteur réponse Y, obtenue par la multiplication de la matrice synaptique A et du vecteur d'entrée X dont les paramètres sont les caractéristiques des objets à classer, en n sous-vecteurs Yi, dont la concaténation redonne le vecteur Y. Il en résulte que la matrice A est décomposée en n sous-matrices Ai. Les vecteurs Yi sont obtenus par la multiplication de la matrice Ai correspondante et du vecteur d'entrée X. De cette façon, les différentes parties du vecteur Y constituées par les sous-vecteurs Yi peuvent être calculées de façon indépendante et parallèle. Ceci permet d'obtenir des sous-matrices de dimensions plus faibles que celle de la matrice A et donc de faciliter les calculs et d'augmenter ainsi la rapidité globale d'exécution. Cette possibilité de mise en parallèle est obtenue grâce au procédé selon l'invention qui combine une méthode d'auto-organisation, avec le procédé de rétro-propagation du gradient dans la phase d'apprentissage et utilise la structure du perceptron dans la phase d'exécution.

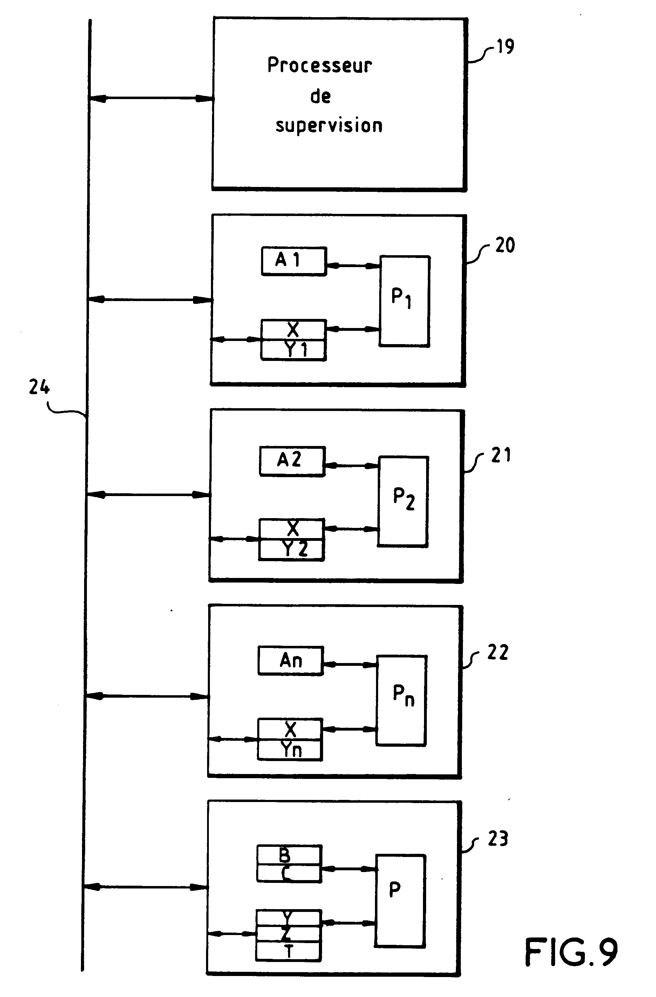

La figure 9 montre le synoptique d'une configuration parallèle possible du dispositif de mise en oeuvre du procédé selon l'invention et suivant la décomposition préconisée par la figure 8.

Le dispositif est composé d'un processeur de supervision 19 par exemple, et de modules 20, 21, 22, 23 dont le nombre varie suivant le nombre de sous matrices Ai obtenues par la décomposition définie précédemment. Tous ces éléments sont couplés entre eux par le bus 24. Dans le cas présent, la matrice A est décomposée en n sous-matrices. Le module 20 contient un processeur de traitement du signal P1 couplé à une mémoire A1 contenant la matrice synaptique A1 et à une mémoire X où est stockée le vecteur d'entrée X, le résultat de la multiplication de A1 par X est stocké dans la mémoire Y1. La donnée contenue dans Y1 est ensuite prise en compte par le module 23 via le bus 24. Le module 23 réalise les opérations relatives aux couches suivantes. Il contient un processeur de traitement du signal P couplé d'une part à une mémoire B contenant la matrice synaptique B et à une mémoire C contenant la matrice synaptique C, d'autre part à une mémoire Y contenant le vecteur d'entrée Y, qui n'est autre que la concaténation des sous-vecteurs Y1, Y2 à Yn délivrés par les modules 20, 21 et 22, à une mémoire Z contenant le résultat de la multiplication BY, enfin A une mémoire T contenant le résultat de la multiplication CZ, c'est-à-dire les classes obtenues. Tous ces calculs se font suivant les relations (1) (2) et (3) étables précédemment et de façon analogue à ce qu'effectue le dispositif de la figure 7. Pour des raisons de clarté, la mémoire contenant la fonction de seuil n'a pas été représentée, elle est en effet transparente vis -à-vis de la décomposition. ne manière analogue et pour les mêmes fonctions, le module 18 contient un processeur P2, des mémoires A2, X et Y2, enfin, le module 22 correspondant à la matrice de rang n, contient un processeur Pn et des mémoires An, X et Yn.

La classification présentée est réalisée suivant trois couches de classification successives, 11 est possible d'envisager par exemple une classification selon l'invention avec deux couches seulement, une première correspondant aux nuages tels qu'ils ont été définis relativement à la figure 2b, la seconde couche correspondant directement aux classes recherchées. Plus généralement, il est possible d'utiliser plus de deux ou trois couches, en fait autant qu'il est nécessaire à la performance souhaitée de la classification.

Cependant, lorsque le problème comporte une grande diversité d'objets, le nombre N de nuages obtenus ainsi par auto-organisation peut être très grand, donc aussi le nombre de problèmes simples résultant à résoudre qui est proportionnel au carré de N. Pour remédier à cet inconvénient le procédé selon l'invention divise dans un premier temps par un procédé d'auto-organisation adapté, l'espace d'apprentissage en groupes, puis en sous- groupes mono-classes.

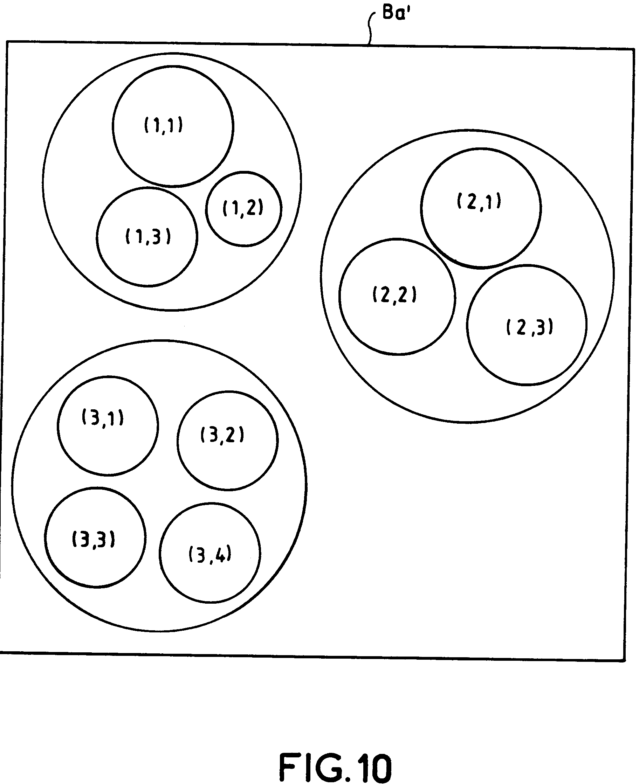

La figure 10 schématise une organisation possible en groupes et en sous-groupes comportant des objets à partir d'une base Ba', repérés par des couples (gi, sgj) où gi indique le numéro de groupe et sgj le numéro de sous-groupe à l'intérieur du groupe. Deux types de problèmes simples peuvent alors être crées : le premier au niveau des groupes et le second au niveau des sous-groupes. L'exemple donné ici ne comprend qu'un niveau de sous-groupes, mais il peut en comporter plusieurs, en fait autant qu'il est nécessaire pour atteindre les performances souhaitées.

## Revendications

1. Procédé de classification automatique d'objets comprenant une phase d'apprentissage (1) réalisée à partir d'une base d'apprentissage (6) et une phase d'exécution (2), la base d'apprentissage (6) étant divisée en nuages par une méthode d'auto-organisation, caractérisé en ce que l'apprentissage de ces nuages se fait par un procédé de rétro-propagation du gradient et que les classes sont obtenues à partir des nuages par un procédé de rétro-propagation du gradient.

2. Procédé selon la revendication 1, caractérisé en ce que la phase d'exécution (2) est appliquée à un objet à classer selon la structure de perception.

3. Procédé selon la revendication 2, caractérisé en ce que la phase d'exécution ( 2 ), comporte au moins deux couches de classification en plus d'une couche de classification d'entrée.

4. Procédé de classification automatique d'objets selon l'une quelconque des revendications 1 à 3, caractérisé en ce qu'en phase d'exécution (2), les résultats intermédiaires de chaque couche de classification sont obtenus suivant la structure du perception combinée avec une fonction de seuil.

5.  Procédé selon l'une quelconque des revendications précédentes, caractérisé en ce qu'un nuage est décomposé en groupes et en sous - groupes.

6.  Dispositif pour la mise en oeuvre du procédé précité, caractérisé en ce qu'il comprend au moins un processeur de traitement du signal (9) couplé à des mémoires (10, 11, 12) contenant les résultats de la phase d'apprentissage, à une mémoire (13) contenant la fonction de seuil, à une mémoire (14) contenant une représentation le l'objet à classer et à des mémoires (15, 16, 17) contenant les résultats des différentes couches de classification successives, lesdites mémoires ( 14, 15, 16, 17) étant elles mêmes couplées à un bus par un circuit d'interface (18).

7.  Dispositif pour la mise en oeuvre du procédé précité, caractérisé en ce qu'il comprend un processeur de supervision (19), des modules (20, 21, 22) destinés à résoudre la première couche de classification et un module (23) destiné à la résolution des couches suivantes, lesdits modules étant reliés par un bus (24).

phase d'apprentissage 1

procédé d'auto_organisation 3

Procédé de rétro_propagation du gradient 4

Base d'apprentissage 6

phase d'exécution 2

Structure du perceptron 5

Objet 7

FIG.1

## FIG.2a

## FIG.2b

N3

Ba(3/4)

N4

**FIG.3a**

8

Ba(3/4)

**FIG.3b**

FIG. 4a

FIG. 4b

FIG. 5

FIG.6a

FIG.6b

FIG.6c

11

A

—10

B

—11

C

—12

Seuil

—13

9

Processeur

de

traitement

du signal

Interface

X

—14

Y

—15

Z

—16

T

—17

18

# FIG.7

FIG.8

FIG.9

FIG.10

Office européen
des brevets

**RAPPORT DE RECHERCHE EUROPEENNE**

Numero de la demande

EP    92 40 1083

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| Y | IJCNN: INTERNAIONAL JOINT CONFERENCE ON NEURAL NETWORKS. 17-21 JUIN 1990,SAN DIEGO, US, IEEE vol. I, pages 423 - 428; D. CASASENT AND E. BARNARD: 'ADAPTIVE CLUSTERING NEURAL NET FOR PIECEWISE NONLINEAR DISCRIMINANT SURFACES' * abrégé; figures 3,4 * --- | 1-4 | G06K9/66 G06F15/18 |
| Y | INTERNATIONAL NEURAL NETWORK CONFERENCE, 9-13 JUILLET 1990, PARIS, FR,KLUWER ACADEMIC PUBLISHERS, DORDRECHT (NL), ETC. pages 318 - 321; M. SAERENS: 'A PRELIMINARY STUDY OF A COMPETITIVE COST FUNCTION APPLIED TO CLUSTERING' * abrégé * ----- | 1-4 | |
| | | | DOMAINES TECHNIQUES RECHERCHES (Int. Cl.5 ) |
| | | | G06K G06F |

Le présent rapport a été établi pour toutes les revendications

| Lieu de la recherche | Date d'achèvement de la recherche | Examinateur |
|---|---|---|
| LA HAYE | 10 AOUT 1992 | Michiel Sonius |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)